# EUROPÄISCHE PATENTSCHRIFT

(11) **EP 2 201 585 B1**
(45) Veröffentlichungstag und Bekanntmachung des Hinweises auf die Patenterteilung: **22.04.2015**
(21) Anmeldenummer: 08804485.4
(22) Anmeldetag: 19.09.2008
(51) Int. Cl.: H01G 4/228, H01G 4/38, H01G 4/40

(54) **ELEKTRISCHES VIELSCHICHTBAUELEMENT**
ELECTRIC MULTILAYER COMPONENT
COMPOSANT ÉLECTRIQUE MULTICOUCHE

(30) Priorität: 19.09.2007 DE 102007044604
(43) Veröffentlichungstag der Anmeldung: 30.06.2010
(73) Patentinhaber: Epcos AG, 81669 München (DE)
(72) Erfinder: FEICHTINGER, Thomas, A-8010 Graz (AT)
(74) Vertreter: Epping - Hermann - Fischer
(86) Internationale Anmeldenummer: PCT/EP2008/062555
(87) Internationale Veröffentlichungsnummer: WO 2009/037346

(56) Entgegenhaltungen:
- US-A- 3 444 436
- US-A- 4 661 884
- US-A1- 2004 184 202
- US-A1- 2007 096 254

## Beschreibung

Es wird ein elektrisches Vielschichtbauelement, insbesondere ein Flipchip-kontaktierbares elektrisches Vielschichtbauelement, angegeben.

Aus JP 05-55084 ist ein Vielschichtkondensator bekannt, der auf einer Seitenfläche zwei Außenkontakte aufweist, die direkt mit Elektrodenschichten verbunden sind.

US-A-3 444 435 zeigt ein elektrisches Vielschichtbauelement mit mehreren L-förmigen Elektrodenschichten, die über einander angeordnet sind. US-A-4 661 884 zeigt ebenfalls ein Bauelement mit mehreren Elektrodenschichten, wie auch US 2004/184202 und US 2007/096254.

Eine zu lösende Aufgabe besteht darin, ein alternatives elektrisches Vielschichtbauelement anzugeben, welches bei möglichst geringem Konstruktionsaufwand Flipchipkontaktierbar ist.

Es wird ein elektrisches Vielschichtbauelement angegeben, welches einen Stapel von nebeneinander angeordneten dielektrischen Schichten und Elektrodenschichten aufweist. Zudem sind verschieden gepolte Außenkontakte vorgesehen, welche an einer und derselben Außenfläche des Stapels angeordnet sind. Die Außenkontakte sind Flipchipkontaktierbar, welches bedeutet, dass sie mit einer Leiterplatte elektrisch in Verbindung gebracht werden können, wenn eine Seite des Vielschichtbauelements auf die Leiterplatte gerichtet wird. Die Elektrodenschichten sind jeweils mit einem Ende mit einem gleich gepolten Außenanschluss verbunden. Die unterschiedlich gepolten Elektrodenschichten überlappen sich in orthogonaler Projektion nicht, wobei zwei unterschiedlich gepolte Elektrodenschichten auf einer gemeinsamen dielektrischen Schicht angeordnet sind und einen Abstand zueinander aufweisen.

Ein elektrisches Vielschichtbauelement mit einer solchen Konstruktion hat den Vorteil, dass es mittels einer einzigen Außenfläche mit einer Leiterplatte elektrisch kontaktiert werden kann, dabei jedoch keine Durchkontaktierungen bzw. Vias, welche Elektrodenschichten miteinander verbinden könnten, erforderlich sind. Das liegt daran, dass die vorgeschlagenen Elektrodenschichten bereits Formen aufweisen, die jeweils mit einem Ende direkt mit einem Außenanschluss, der auf derselben Seitenfläche des Vielschichtbauelements angeordnet ist, wie ein anderer mit einer Elektrodenschicht direkt verbundener gegenpoliger Außenanschluss, verbunden sind. Somit kann ein komplizierter Aufbau bzw. eine aufwendige Herstellung eines Vielschichtbauelements mit Elektrodenschichten kontaktierenden Vias vermieden werden.

Gemäß einer Ausführungsform des elektrischen Vielschichtbauelements verläuft die Stapelrichtung des Stapels im Wesentlichen parallel zu einer Leiterplatte bzw. Montagefläche, auf die das Vielschichtbauelement montiert werden kann. Bezogen auf die Montagefläche sind also die Schichten des Stapels lateral nebeneinander, im Gegensatz zu übereinander, angeordnet.

Eine solche Konstruktion hat den Vorteil, dass Elektroden mit verhältnismäßig einfachen Formen die Außenkontakte des Vielschichtbauelements direkt kontaktieren können. Eine andere Stapelrichtung des Stapels, beispielsweise senkrecht zu einer Montagefläche, ist zwar möglich, hätte jedoch zur Folge, dass die Elektroden des Vielschichtbauelements nicht platzoptimiert und jeweils mehrfach gekrümmt ausgebildet sein müssten, um mit den an einer einzigen Außenfläche des Stapels angeordneten, Flipchip-kontaktierbaren Außenkontakte verbunden zu werden.

Außerdem wird eine Montageanordnung für ein Flipchip-kontaktierbares elektrisches Vielschichtbauelement angegeben, bei der der Aufbau des Vielschichtbauelements eines der in diesem Dokument beschriebenen Ausführungsformen entspricht und mittels an einer Außenfläche des Vielschichtbauelements angeordneten Außenkontakten mit einer Leiterplatte elektrisch kontaktiert ist. Die Außenkontakte enthalten vorzugsweise Silber und / oder Palladium. Dabei kontaktierten die Außenkontakte entsprechende Kontakte auf der Leiterplatte. Gemäß einer Ausführungsform der Leiterplatte sind ihre mit dem Vielschichtbauelement kontaktierbaren Kontakte über bzw. mittels Durchkontaktierungen mit in der Leiterplatte integrierten Leiterbahnen verbunden. Gemäß einer Weiterbildung der Montageanordnung umfasst die Leiterplatte mehrere übereinander gestapelte Substratschichten, zwischen denen die Leiterbahnen verlaufen.

Unterschiedlich gepolte Elektrodenschichten in Wechselwirkung mit einer jeweils dazwischen liegenden dielektrischen Schicht können dabei Kapazitäten erzeugen, welche die elektrischen Eigenschaften des Vielschichtbauelements bzw. der Vielschichtstrukturen im Vielschichtbauelement mitbestimmen. Beispiele von im Vielschichtbauelement enthaltenen Vielschichtstrukturen sind Vielschichtvaristoren oder Vielschichtkondensatoren.

Verläuft die Stapelrichtung des Stapels gemäß der bereits genannten Ausführungsform parallel zu einer Montagefläche, so verläuft die Überlappung der Elektrodenschichtenflächen in orthogonaler Projektion ebenfalls parallel zur Montagefläche des Vielschichtbauelements.

Eine Ausführungsform des elektrischen Vielschichtbauelements sieht vor, dass sich unterschiedlich gepolte Elektrodenschichten in orthogonaler Projektion nicht überlappen, wobei sie stattdessen auf einer gemeinsamen dielektrischen Schicht angeordnet sind und einen Abstand zueinander aufweisen. Die Elektrodenschichten weisen jeweils einander zugewandte und voneinander beabstandete Enden auf. Dadurch können verhältnismäßig kleine Kapazitäten zwischen diesen Elektrodenschichten erzeugt werden, welches für bestimmte Anwendungen des Vielschichtbauelements, wie beispielsweise in der Mikroelektronik, als Vielschichtkondensator oder als Vielschichtvaristor von Vorteil sein könnte.

Vorzugsweise sind die Elektrodenschichten derart geformt, dass sie jeweils an einem Ende mit einem Außenkontakt verbunden sind und richtigungsändernd ins Innere des Stapels verlaufen. Dabei können unterschiedlich gepolte Elektrodenschichten, die insbesondere benachbart sind, derart geformt sein, dass sie zunächst im Wesentlichen in entgegengesetzte Richtungen ins Innere des Stapels verlaufen. Das bedeutet, dass diese Elektrodenschichten von einem mit einem Außenkontakt verbundenem Ende aus gesehen einen lateral, d.h. parallel zur Montageplatte versetzten, konvergierenden Verlauf aufweisen. Vorzugsweise sind die Elektrodenschichten dabei L-förmig, wobei ein erster Schenkel einer L-förmigen Elektrodenschicht mit einem Außenkontakt verbunden ist und der zweite Schenkel der Elektrodenschicht im Wesentlichen parallel zu einer Montagefläche verläuft.

Bei benachbarten, unterschiedlich gepolten, L-förmigen Elektrodenschichten können sich die jeweiligen zweiten Schenkel in orthogonaler Projektion überlappen. In diesem Überlappbereich können beispielsweise Kapazitäten erzeugt werden.

Gemäß einer Ausführungsform des elektrischen Vielschichtbauelements liegt das Ende eines zweiten Schenkels einer L-förmigen Elektrodenschicht dem Ende eines auf derselben dielektrischen Schicht angeordneten zweiten Schenkels einer gegensätzlich gepolten Elektrodenschicht gegenüber, wobei die Enden der beiden zweiten Schenkel der jeweiligen Elektrodenschichten einen Abstand zueinander aufweisen. Somit können zwischen den beiden L-förmigen Elektrodenschichten auf derselben dielektrischen Schicht verhältnismäßig kleine Kapazitäten erzeugt werden.

Gemäß einer Ausführungsform sind die Elektrodenschichten des Vielschichtbauelements an jeweils mehreren Seiten bis an die Außenfläche des Stapels herangeführt. Dort wo die Elektrodenschichten bis an die Außenfläche des Stapels herangeführt sind, können sie auch von außen kontaktiert werden, wie beispielsweise wenn das Vielschichtbauelement gemäß einer "Embedded" Ausführungsform in einer Leiterplatte eingebettet bzw. vergraben ist. Beispielsweise könnte das Ende eines kürzeren Schenkels zumindest einer Elektrodenschicht des Vielschichtbauelements bis an eine erste Außenfläche herangeführt sein und eine Längsseite eines längeren Schenkels derselben oder einer anderen Elektrodenschicht bis an eine weitere Außenfläche des Vielschichtbauelements herangeführt sein. Es kann sich bei der ersten und bei der weiteren Außenfläche jeweils um eine deckseitige oder eine bodenseitige Außenfläche des Vielschichtbauelements handeln. So kann das Vielschichtbauelement vorteihafterweise von "oben" und von "unten" kontaktiert werden.

Zusätzlich oder alternativ kann es beim Vielschichtbauelement vorgesehen sein, dass es sich bei der weiteren Außenfläche um eine senkrecht zu einer Leiterplatte verlaufende Außenfläche handelt, sodass das Vielschichtbauelement einerseits von "oben" oder von "unten" und andereseits von der "Seite" her, bezogen auf die Ausrichtung des Vielschichtbauelements auf einer Leiterplatte, kontaktiert werden kann.

Gemäß einer Ausführungsform ist das Vielschichtbauelement in einem Laminat aus Leiterplattenschichten eingebettet und bildet somit Bestandteil einer Montage- bzw. elektrischen Bauelementanordnung. Dabei ist das Vielschichtbauelement oberseitig mittels einer Leiterplattenschicht des Laminats abgedeckt. Unterseitig ist eine weitere Leiterplattenschicht vorhanden, auf der das Vielschichtbauelement liegt. Dabei können einzelne Leiterplattenschichten des Laminats Durchkontaktierungen aufweisen, welche ihrerseits mit auf Leiterplattenschichten aufgedruckten Leiterbahnen verbunden sein können. Die Leiterplattenschichten des Laminats weisen vorzugsweise Durchkontaktierungen auf, welche mit den Außenkontakten des Vielschichtbauelements kontaktiert werden können. Die Leiterplattenschichten enthalten vorzugsweise ein Polymer.

Eine Weiterbildung des elektrischen Vielschichtbauelements sieht vor, dass eine Masseelektrode auf einer dielektrischen Schicht des Stapels angeordnet ist und an einem Ende mit einem an einer Außenfläche des Stapels angeordneten Massekontakt kontaktiert ist. Der Massekontakt könnte dabei auf derselben Außenfläche des Vielschichtbauelements zwischen den die Elektrodenschichten kontaktierenden Außenkontakten angeordnet sein. Es könnten mehrere Masseelektroden zwischen jeweils nebeneinander angeordneten dielektrischen Schichten bzw. Elektrodenschichten angeordnet sein. Eine Masseelektrode kann vorteilhafterweise dazu genutzt werden, dem Vielschichtbauelement ein günstiges Filterverhalten zu verleihen, wobei sie Überspannungen bzw. damit einhergehende hochfrequente Störungen ableiten kann und dadurch das Vielschichtbauelement vor Überbeanspruchung schützt.

Vorzugsweise sind die Außenkontakte, die mit den Elektrodenschichten verbunden sind, so weit wie möglich voneinander entfernt auf derselben Außenfläche des Stapels angeordnet. Dabei können die Außenkontakte auf unterschiedlichen Randbereichen derselben Außenfläche des Stapels angeordnet sein. Je größer der Abstand zwischen den unterschiedlich gepolten Außenkontakten auf derselben Außenfläche des Stapels, desto kleiner wird die Wahrscheinlichkeit, dass ein Kurzschluss zwischen ihnen zustande kommt.

Gemäß einer Ausführungsform ist die Außenfläche des Stapels zumindest teilweise passiviert. Die Passivierung des Stapels hat den Vorteil, die Materialien des Stapels, beispielsweise die dielektrischen Schichten, Elektrodenschichten oder die Funktionskeramiken des Stapels, vor äußeren chemischen oder mechanischen Einflüssen zu schützen. Dadurch können konstantere elektrische Kennwerte des Vielschichtbauelements erreicht werden.

Gemäß einer Ausführungsform ist die Passivierung des Stapels bzw. des Vielschichtbauelements durch eine glashaltige oder polymerhaltige, auf zumindest einer Außenfläche des Stapels aufgebrachten Schicht, erreicht. Die Passivierung könnte jedoch auch mittels einer keramikhaltigen Schicht auf der Außenfläche des Stapels erreicht werden. Die keramikhaltige Schicht enthält vorzugsweise eine der folgenden Materialien: ZrOₓ, MgO, AlOₓ, wobei x für eine Zahl ≥ 1 steht und die Höhe der Oxidationszahl der jeweils mit Sauerstoff verbundenen Elementen angibt.

Die Elektrodenschichten sowie Masseelektroden des elektrischen Vielschichtbauelements enthalten vorzugsweise eine bzw. eine Legierung der folgenden Materialien: Silber, Palladium, Nickel, Kupfer. Vorzugsweise weisen die Außenkontakte, die mit den Elektrodenschichten kontaktiert sind, ein mit den Elektrodenschichten gemeinsames Material auf, welches die Kontaktierung der beiden miteinander begünstigt.

Das elektrische Vielschichtbauelement weist gemäß einer Ausführungsform einen Widerstand auf, der mit den gegenpoligen Außenkontakten kontaktiert ist. Der Widerstand kann als Widerstandsbahn- oder Schicht auf der Oberfläche des Stapels aufgedruckt sein. Er kann alternativ auf einer Passivierung aufgebracht sein und / oder mittels einer Passivierung abgedeckt sein.

Gemäß einer Ausführungsform des elektrischen Vielschichtbauelements sind mehrere Stapel von Elektrodenschichten nebeneinander angeordnet, wobei die Elektrodenschichten unterschiedlicher Stapel auf gemeinsamen dielektrischen Schichten angeordnet sind. Die Stapel von Elektrodenschichten können dabei in Längsrichtung oder lateral nebeneinander angeordnet sein. Mit dieser Konstruktion weist das Vielschichtbauelement ein Array von Vielschichtstrukturen auf, welche in demselben Vielschichtbauelement angeordnet sein können. Da das Vielschichtbauelement vorzugsweise monolithisch aufgebaut ist, bedeutet dies, dass mehrere Vielschichtstrukturen als Array in einem einzigen Stapel bzw. Grundkörper monolithisch enthalten sein können.

Gemäß einer Ausführungsform des Vielschichtbauelements enthalten die dielektrischen Schichten eine Varistorkeramik. Ein Stapel derart geschaffener dielektrischer Schichten bildet zusammen mit Elektrodenschichten einen Vielschichtvaristor. Die Varistorkeramik umfasst vorzugsweise Zinkoxid (ZnO).

Alternativ oder zusätzlich können dielektrische Schichten des Vielschichtbauelements eine Kondensatorkeramik enthalten aus den Klassen X7R, COG, Z5U. Derart ausgeführte und abwechselnd mit Elektrodenschichten nebeneinander angeordnete dielektrische Schichten können einen Vielschichtkondensator bilden, der als Vielschichtstruktur neben einem Vielschichtvaristor in demselben elektrischen Vielschichtbauelement integriert sein könnte.

Auch könnten die dielektrischen Schichten ein nichtlinear resistives Material, beispielsweise ein NTC- oder ein PTC-Material, enthalten. Wenn mehrere solche dielektrische Schichten abwechselnd mit Elektrodenschichten nebeneinander angeordnet sind, kann eine Vielschicht-NTC-Struktur bzw. eine Vielschicht-PTC-Struktur geschaffen werden, wobei die Vielschichtstrukturen mit den bereits anderen genannten Vielschichtstrukturen in demselben Vielschichtbauelement integriert sein könnten.

Die obigen, in einem gemeinsamen Stapel von dielektrischen Schichten integrierten Vielschichtstrukturen, deren dielektrische Schichten eine Varistorkeramik, Kondensatorkeramik oder ein NTC- oder PTC-Material enthalten, können elektrische Vielschichtbauelemente mit einer gegebenenfalls Vielzahl von elektrischen Funktionen, insbesondere von elektrischen Filterfunktionen, bilden. Dennoch können diese vorteilhafterweise kleine Baugrößen aufweisen bzw. in Flachbauweise hergestellt werden.

Die beschriebenen Gegenstände werden anhand der folgenden Figuren und Ausführungsbeispiele näher erläutert. Dabei zeigt:
- Figur 1A: eine seitliche Querschnittsansicht eines elektrischen Vielschichtbauelements,
- Figur 1B: eine Draufsicht auf einen Querschnitt des mit der Figur 1A gezeigten Bauelements, wobei der Querschnitt zwischen den Außenkontakten und dem Stapel des Vielschichtbauelements verläuft,
- Figur 1C: eine Draufsicht auf einen Querschnitt des mit der Figur 1A gezeigten Bauelements, wobei der Querschnitt durch die Außenkontakte des Vielschichtbauelements verläuft,
- Figur 2A: eine seitliche Querschnittsansicht des Bauelements gemäß der Figuren 1A mit einer zusätzlichen Passivierungsschicht,
- Figur 2B: eine Draufsicht auf einen Querschnitt des mit der Figur 2A gezeigten Bauelements, wobei der Querschnitt zwischen der oberen Passivierungsschicht und den Stapel verläuft,
- Figur 2C: eine Draufsicht auf einen Querschnitt des mit der Figur 2A gezeigten Bauelements, wobei der Querschnitt zwischen den Außenkontakten und der oberen Passivierungsschicht verläuft,
- Figur 2D: eine Draufsicht auf einen Querschnitt des mit der Figur 3A gezeigten Bauelements, wobei der Querschnitt durch die Außenkontakte des Vielschichtbauelements verläuft,
- Figur 3A: eine seitliche Querschnittsansicht des Bauelements gemäß Figur 2A mit vergrößerten Elektrodenschichtenflächen,
- Figur 3B: eine Draufsicht auf einen Querschnitt des mit der Figur 3A gezeigten Bauelements, wobei der Querschnitt zwischen der oberen Passivierungsschicht und den Stapel von dielektrischen Schichten verläuft,
- Figur 3C: eine Draufsicht auf einen Querschnitt des mit der Figur 3A gezeigten Bauelements, wobei der Querschnitt zwischen den Außenkontakten und der oberen Passivierungsschicht verläuft,
- Figur 3D: eine Draufsicht auf einen Querschnitt des mit der Figur 3A gezeigten Bauelements, wobei der Querschnitt durch die Außenkontakte des Vielschichtbauelements verläuft,
- Figur 4A: eine seitliche Querschnittsansicht eines elektrischen Vielschichtbauelements aufweisend sich nicht gegenseitig in orthogonaler Projektion überlappende Elektrodenschichten,
- Figur 4B: eine Draufsicht auf einen Querschnitt des mit der Figur 4A gezeigten Bauelements, wobei der Querschnitt zwischen der oberen Passivierungsschicht und den Stapel von dielektrischen Schichten verläuft,
- Figur 4C: eine Draufsicht auf einen Querschnitt des mit der Figur 4A gezeigten Bauelements, wobei der Querschnitt durch die Außenkontakte des Vielschichtbauelements verläuft,
- Figur 5A: eine seitliche Querschnittsansicht eines mehrere Vielschichtstrukturen aufweisenden elektrischen Vielschichtbauelements,
- Figur 5B: eine Draufsicht auf einen Querschnitt des mit der Figur 5A gezeigten Bauelements, wobei der Querschnitt zwischen den Außenkontakten und den Stapel von dielektrischen Schichten verläuft,
- Figur 5C: eine Draufsicht auf einen Querschnitt des mit der Figur 5A gezeigten Bauelements, wobei der Querschnitt durch die Außenkontakte verläuft,
- Figur 6A: eine seitliche Querschnittsansicht eines mehrere Vielschichtstrukturen aufweisenden elektrischen Vielschichtbauelements mit zusätzlichen Masseelektroden und einem Massekontakt,
- Figur 6B: eine Draufsicht auf einen Querschnitt des mit der Figur 6A gezeigten Bauelements, wobei der Querschnitt zwischen den Außenkontakten und den Stapel von dielektrischen Schichten verläuft,
- Figur 6C: eine Draufsicht auf einen Querschnitt des mit der Figur 6A gezeigten Bauelements, wobei der Querschnitt durch die Außenkontakten und den Massekontakt verläuft,
- Figur 7: eine seitliche Querschnittsansicht einer Montageanordnung für ein elektrisches Vielschichtbauelement in Flipchip-Bauweise, welches auf einer Leiterplatte montiert ist.
- Figur 8: eine seitliche Querschnittsansicht einer Montageanordnung für ein elektrisches Vielschichtbauelement in Flipchip-Bauweise, welches innerhalb eines Laminats bzw. innerhalb einer Schichtenfolge einer Leiterplatte angeordnet ist.
- Figur 9: eine seitliche Querschnittsansicht auf ein oberflächenmontierbares elektrisches Vielschichtbauelement mit hochkant verlaufenden Elektrodenschichten und Masseelektroden und einem Widerstand,
- Figur 10: eine Draufsicht auf die den Widerstand aufweisende Seite des Vielschichtbauelements gemäß Figur 9,
- Figur 11: eine Draufschicht auf die den Massekontakt aufweisende Seite des Vielschichtbauelements gemäß Figur 10.

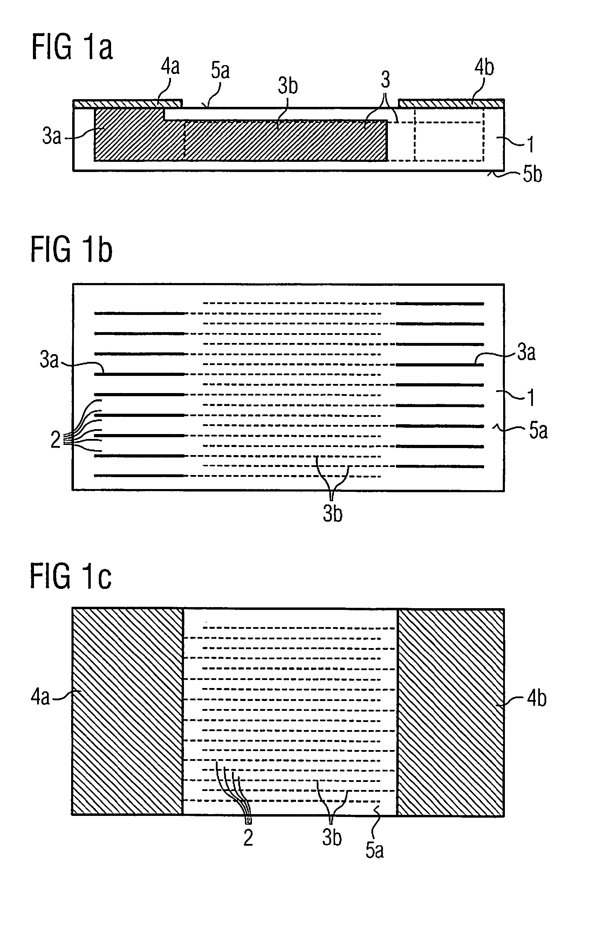

Die Darstellung gemäß Figur 1A ist eine seitliche Querschnittsansicht eines elektrischen Vielschichtbauelements mit einem Stapel 1 von bezogen auf eine Montagefläche lateral nebeneinander angeordneten dielektrischen Schichten 2 und Elektrodenschichten 3. Auf der Kontaktseite 5a des Stapels 1 sind Außenkontakte 4a und 4b angeordnet, welche sich von der Mitte des Stapels 1 versetzt jeweils in einem Randbereich der Kontaktseite 5a des Stapels befinden. Elektrodenschichten 3 sind mit jeweils einem Kontaktierungsende jeweils mit einem Außenkontakt verbunden und erstrecken sich L-förmig in das Innere des Schichtstapels 1, wobei der längere Schenkel 3b einer jeden L-förmigen Elektrodenschicht 3 in orthogonaler Projektion mit dem längeren Schenkel 3b einer benachbarten, L-förmigen Elektrodenschicht 3 überlappt.

Figur 1B zeigt die Querschnitte bzw. Kanten an der Kontaktseite von den kürzeren Schenkeln 3a der Elektrodenschichten 3 als durchgehende Linien und weiter im Inneren des Schichtstapels befindliche längere Schenkel 3b der Elektrodenschichten 3 als gestrichelte Linien. Die Querschnittsfläche gemäß dieser Darstellung befindet sich zwischen den mit der Figur 1A gezeigten Außenkontakten 4a und 4b und dem Erstreckungsbereich der längeren Schenkel 3b der L-förmigen Elektrodenschichten 3. Es werden zudem die oberen Kanten 2 der dielektrischen Schichten 2 in dieser Querschnittsansicht gezeigt.

Figur 1C ist eine Darstellung einer Querschnittsebene, welche planar durch die Außenkontakte 4a und 4b verläuft. Die Querschnitte der kürzeren Schenkel 3a der Elektrodenschichten 3 werden in dieser Ansicht von den Flächen der Außenkontakte 4a und 4b abgedeckt, wobei die Querschnitte der längeren Schenkel 3b der Elektrodenschichten 3 mit gestrichelten Linien dargestellt werden.

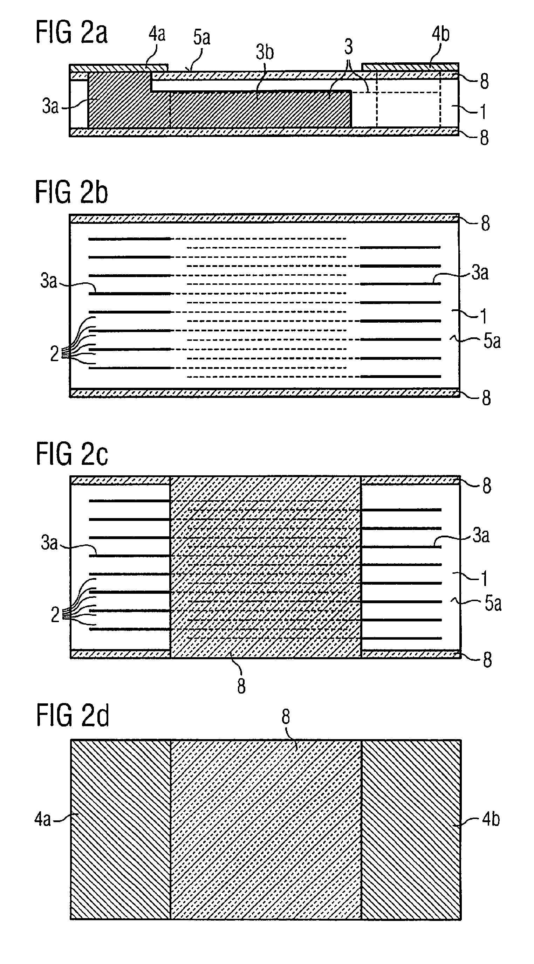

Im Unterschied zur Figur 1A zeigt die Figur 2A ein elektrisches Vielschichtbauelement mit einem Stapel 1 von nebeneinander angeordneten dielektrischen Schichten und Elektrodenschichten 3, wobei der Stapel 1 deck- und bodenseitig jeweils mit einer Passivierungsschicht 8 versehen ist. Eine Bodenseite des Vielschichtbauelements bezieht sich dabei auf die Seite, die später der Montagefläche zugewandt sein wird.

An den seitlichen Außenflächen des Schichtstapels 1 sind weitere Passivierungsschichten aufgebracht, jedoch sind diese in dieser Querschnittsansicht nicht sichtbar, damit die innere Struktur des Vielschichtbauelements von der Seite her sichtbar gemacht werden kann.

Die gezeigten Passivierungsschichten 8 bilden eine Deckschicht bzw. eine Bodenschicht des Vielschichtbauelements. Die kürzeren Schenkel 3a der L-förmigen Elektrodenschichten 3 sind gemäß dieser Ausführungsform durch die eine Bodenschicht bildende Passivierungsschicht 8 bis zur ihrer Oberfläche 5a hindurchgeführt und mit den auf der Passivierungsschicht 8 angeordneten Außenkontakten 4a und 4b direkt verbunden.

Figur 2B zeigt eine Draufsicht auf einen Querschnitt im Bodenbereich des mit der Figur 2A gezeigten Vielschichtbauelements, wobei an die Oberfläche 5a der eine Bodenschichten bildende Passivierungsschicht 8 herausgeführte Enden der kürzeren Schenkel 3a der Elektrodenschichten 3 mittels durchgehenden Linien und tiefer im Innern des Stapels 1 befindliche längere Schenkel 3b der Elektrodenschichten 3 mittels gestrichelter Linien gezeigt werden. Auch werden Passivierungsschichten 8 gezeigt, welche den Schichtstapel 1 seitlich abgrenzen.

Figur 2C ist eine weitere Draufsicht auf einen Querschnitt im Bodenbereich des mit der Figur 2A gezeigten Vielschichtbauelements, wobei der Querschnitt durch die als Bodenschicht dienende Passivierungsschicht 8 verläuft. Allerdings ist zur Veranschaulichung lediglich der bezogen auf die laterale Ausdehnung des Vielschichtbauelements mittlere Bereich dieser Passivierungsschicht 8 gezeigt, damit die bis an die bodenseitige Außenfläche 5a des Vielschichtbauelements herangeführten Enden der kürzeren Schenkel 3a der jeweiligen Elektrodenschichten 3 sichtbar werden. Außerdem werden seitlich an den Schichtstapel angebrachte weitere Passivierungsschichten 8 gezeigt, wobei deren bodenseitige Kanten mit dieser Figur gezeigt werden.

Figur 2D ist eine Darstellung eines durch die mit der Figur 2A gezeigten Außenkontakte 4a und 4b verlaufenden Querschnitts, wobei die rechteckigen Flächen dieser Außenkontakte sowie die rechteckige Fläche des zwischen diesen Außenkontakten angeordneten Bereichs der Passivierungsschicht 8 gezeigt werden. Die Außenkontakte 4a und 4b sowie die kontaktseitige Passivierungsschicht 8 decken die Kontaktseite des Vielschichtbauelements vorzugsweise vollständige zusammen ab.

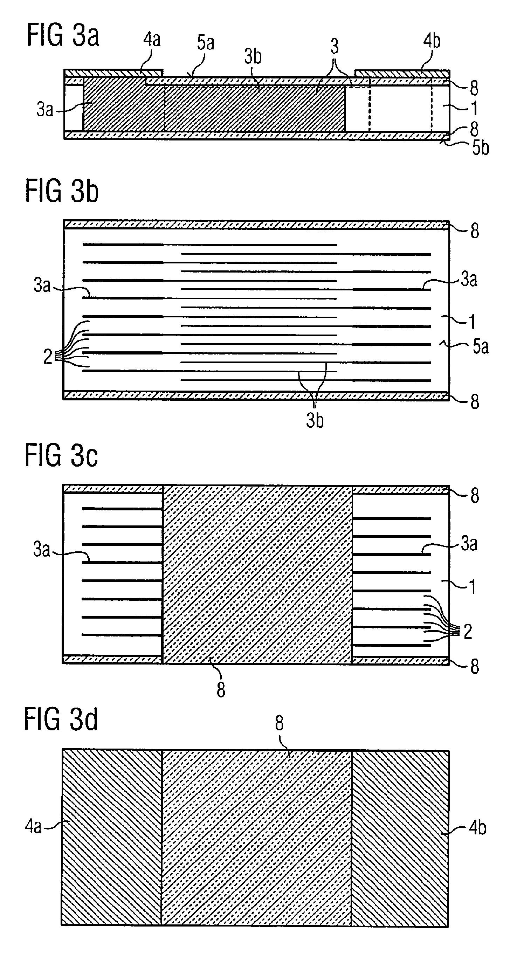

Im Unterschied zur Figur 2A zeigt die Figur 3A Elektrodenschichten 3 mit insgesamt vergrößerten Flächen, wobei insbesondere die vertikalen Ausdehnungen der längeren Schenkel 3b der Elektrodenschichten 3 vergrößert worden sind, sodass die oberseitigen Kanten (in der Figur im unteren Bereich des Vielschichtbauelements) der Schenkel 3b bis zu einer oberen Passivierungsschicht bzw. Bodenschicht 8 herangeführt sind.

Figur 3B ist eine Draufsicht auf einen Querschnitt des mit der Figur 3A gezeigten Vielschichtbauelements, wobei der Querschnitt durch die Elektrodenschichten 3 verläuft und somit die Draufsicht auf die kürzeren Schenkel 3a der Elektrodenschichten 3 als dickere, durchgehende, horizontale Linien und die Draufsicht auf die längeren Schenkel 3b der Elektrodenschichten 3 mit einer dünneren, durchgehenden, horizontalen Linie gezeigt werden. Außerdem werden seitlich an den Schichtstapel 1 angebrachte Passivierungsschichten 8 gezeigt.

Im Gegensatz zur Figur 3B zeigt Figur 3C eine Draufsicht auf einen Querschnitt des mit der Figur 3A gezeigten Vielschichtbauelements, wobei der Querschnitt an der Grenze zwischen der kontaktseitigen Bodenschicht bzw. Passivierungsschicht 8 und der auf dieser Bodenschicht angeordneten Außenkontakten 4a und 4b verläuft. Somit sind bei dieser Draufsicht die bis an die äußere Oberfläche 5a der Bodenschicht herangeführten Enden der kürzeren Schenkel 3a der Elektrodenschichten 3 sichtbar. Diese werden mit durchgehenden, horizontalen Linien gezeigt. Außerdem werden seitlich an den Schichtstapel 1 angebrachte Passivierungsschichten 8 bzw. deren oberen Kanten gezeigt.

Figur 3D ist eine Draufsicht auf einen Querschnitt des mit der Figur 3A gezeigten Vielschichtbauelements, wobei der Querschnitt durch die kontaktseitig auf der Bodenschicht angeordneten Außenkontakten 4a und 4b verläuft und der zwischen diesen Außenkontakten vorhandene Bereich der Passivierungsschicht 8 sichtbar ist.

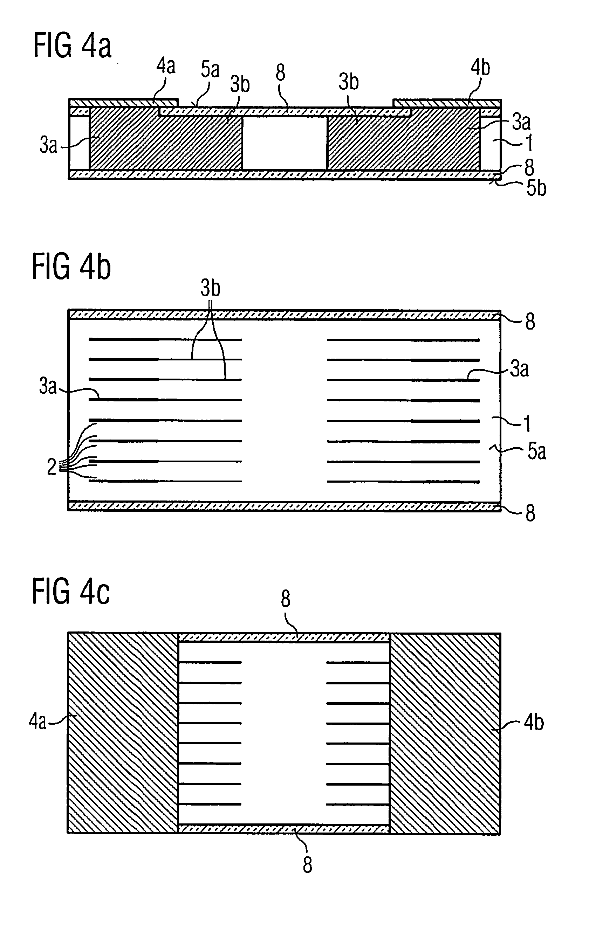

Figur 4A zeigt eine seitliche Querschnittsansicht eines elektrischen Vielschichtbauelements mit einem Schichtstapel 1 von dielektrischen Schichten und Elektrodenschichten 3, wobei die Elektrodenschichten im Vergleich zu den vorhergehenden Ausführungsbeispielen kleinere bzw. kürzere L-Formen aufweisen. Dabei erstrecken sich die L-förmigen Elektrodenschichten 3 von den Außenkontakten 4a und 4b im Vergleich zu den bereits beschriebenen Ausführungsbeispielen weniger tief ins Innere des Schichtstapels 1. Insbesondere überlappen sich unterschiedlich gepolte Elektrodenschichten 3a in orthogonaler Projektion nicht, wobei eine elektrische Wechselwirkung zwischen unterschiedlich gepolten Elektrodenschichten stattdessen in einer parallel zu einer Montagefläche verlaufenden Ebene des Schichtstapels 1 stattfinden. Insbesondere sind zwei unterschiedlich gepolte Elektrodenschichten auf einer gemeinsamen dielektrischen Schicht 2 angeordnet, wobei eine Kapazität zwischen den einander zugewandten Enden der längeren Schenkel 3b der Elektrodenschichten 3 in derselben Ebene auf der gemeinsamen dielektrischen Schicht 2 erzeugt werden. Mittels dieser Ausführungsform können verhältnismäßig geringe Kapazitäten erzeugt werden, welche bei manchen Elektronikanwendungen zum Einsatz kommen. Auch bei dieser Ausführungsform sind vorzugsweise obere und untere Passivierungsschichten 8 bzw. eine passivierende Bodenschicht 8 und eine passivierende Deckschicht 8 vorhanden, die den Schichtstapel 1 unter- bzw. oberseitig abgrenzen. Auf der oberen Deckschicht 8 sind Außenkontakte 4a und 4b angeordnet, wobei die kürzeren Schenkel der Elektrodenschichten durch die kontaktseitige Passivierungsschicht 8 hindurchgeführt und mit den jeweiligen Außenkontakten 4a bzw. 4b direkt verbunden sind.

Figur 4B ist eine Draufsicht auf einen Querschnitt des mit der Figur 4A gezeigten Vielschichtbauelements, wobei der Querschnitt zwischen der kontaktseitigen Passivierungsschicht 8 und dem Schichtstapel 1 gemäß Figur 4A angeordnet ist. Somit werden die Querschnitte bzw. Kanten der kürzeren Schenkel 3a der Elektrodenschichten mit dickeren, horizontalen Linien und die Kanten der längeren Schenkel der Elektrodenschichten 3 mit dünneren, horizontalen Linien gezeigt. Außerdem werden seitlich an den Schichtstapel 1 angebrachte Passivierungsschichten 8 gezeigt. Figur 4C ist eine Draufsicht auf einen Querschnitt des mit der Figur 4A gezeigten Vielschichtbauelements, wobei der Querschnitt durch die Ebene der kontaktseitig auf der Passivierungsschicht 8 angeordneten Außenkontakten 4a und 4b verläuft. Es werden Teile der oberen Kanten der längeren Schenkel 3b der Elektrodenschichten 3 gezeigt, welche sich teilweise in dieser Projektion unterhalb der rechteckförmigen Außenkontakten 4a und 4b befinden. Zur Veranschaulichung ist die prinzipiell zwischen den Außenkontakten 4a und 4b und dem Schichtstapel 1 vorhandene Passivierungsschicht A nicht dargestellt, damit die inneren Bereiche der Elektrodenschichten 3 sichtbar werden.

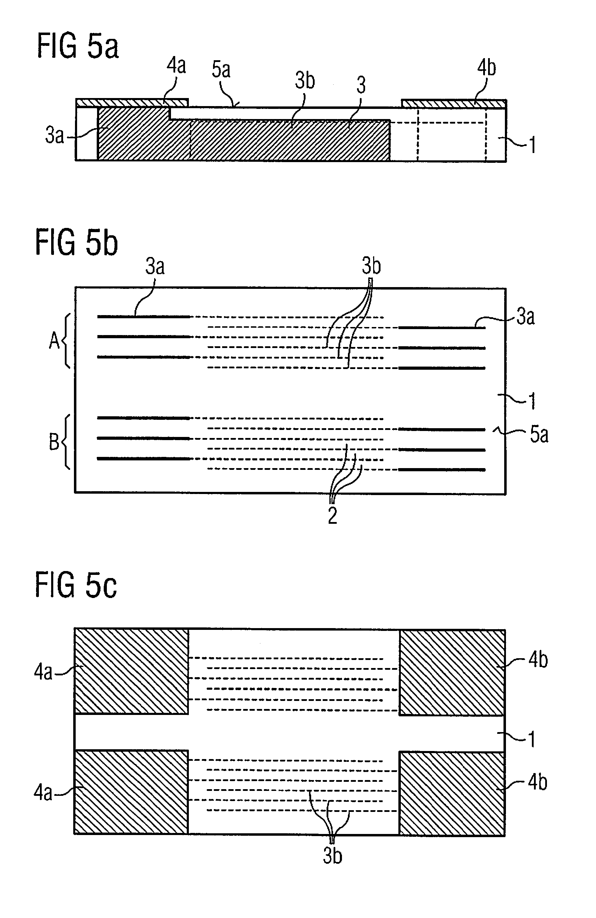

Figur 5A zeigt ein elektrisches Vielschichtbauelement als Array von Vielschichtstrukturen, wobei eine seitliche Querschnittsansicht dieses Vielschichtbauelements an den Außenkontakten 4a und 4b beginnende und L-förmig ins Innere des Stapels 1 weitergeführte Elektrodenschichten 3 zeigt. Figur 5B zeigt einen Querschnitt des mit der Figur 5A gezeigten Vielschichtbauelements in der Ebene zwischen den Außenkontakten 4a, 4b und dem Schichtstapel 1. Mittels dieser Draufsicht sind mehrere Vielschichtstrukturen A und B bzw. deren bodenseitigen Kanten sichtbar, wobei jede Vielschichtstruktur eine Schichtfolge von nebeneinander angeordneten dielektrischen Schichten 2 und Elektrodenschichten 3 umfasst. Eine Vielschichtstruktur weist eine bestimmte elektrische Funktion auf, wie beispielsweise ein Vielschichtkondensator, Vielschichtvaristor, Vielschicht-PTC-Widerstand oder Vielschicht-NTC-Widerstand. Die Vielschichtstrukturen A und B können in einem Vielschichtbauelement monolithisch integriert sein. Zwischen Vielschichtstrukturen mit unterschiedlichen elektrischen Funktionen können elektrische Entkopplungsschichten vorhanden sein, die ein elektromagnetisches Übersprechen zwischen diesen Vielschichtstrukturen vermeiden. Gemäß dieser Figur werden für jede Vielschichtstruktur A, B die kontaktseitigen Kanten der kürzeren Schenkel 3a der L-förmigen Elektrodenschichten sowie die kontaktseitigen Kanten der längeren Schenkel 3b der L-förmigen Elektrodenschichten gezeigt.

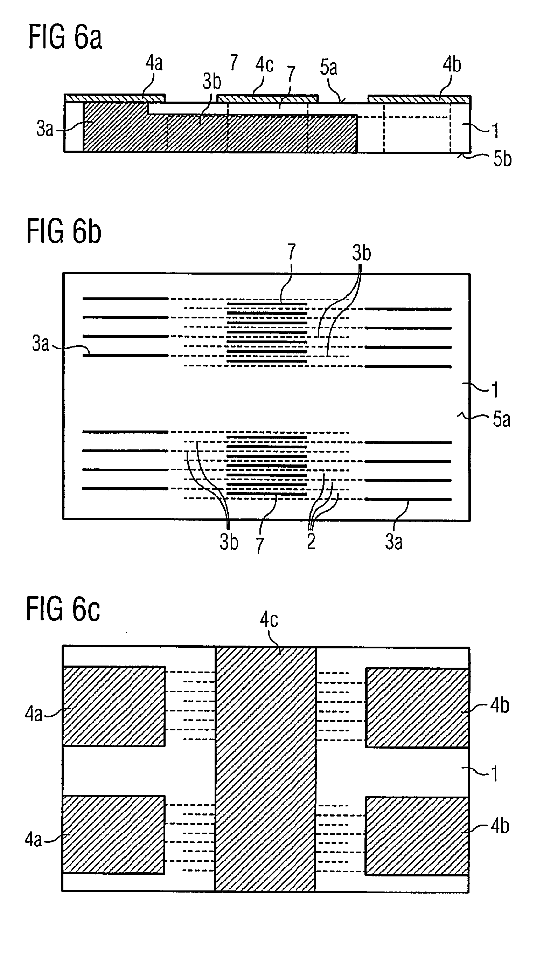

Figur 5C zeigt einen Querschnitt des mit der Figur 5A vorgestellten Vielschichtbauelements in einer Ebene, welche durch die Flipchip-Außenkontakte 4a und 4b verläuft. Es wird gezeigt, wie für jede Vielschichtstruktur Außenkontakte vorgesehen sind, welche mit den nach kontaktseitig herausgeführten Enden der kürzeren Schenkel 3a der L-förmigen Elektrodenschichten jeweiliger Vielschichtstrukturen verbunden sind. Somit könnte die kontaktseitige Außenfläche eines Schichtstapels 1 mit mehreren in jeweils Randbereichen angeordneten Außenkontakten versehen sein. Figur 6A ist eine seitliche Querschnittsansicht eines als Array ausgebildeten elektrischen Vielschichtbauelements, wobei im Vergleich zu dem mit den Figuren 5A bis 5C dargestellten Vielschichtbauelements ein zusätzlicher Massekontakt 4c auf der kontaktseitigen Außenfläche 5a des Schichtstapels 1 angeordnet ist und diese zwischen dielektrischen Schichten 2 und Elektrodenschichten 3 angeordnete Masseelektroden 7 kontaktiert. Die Masseelektrode 4c ist vorzugsweise auf derselben oberen Außenfläche 5a des Schichtstapels 1 angeordnet, wie die die Elektrodenschichten 3 kontaktierenden Außenkontakte 4a und 4b. Somit wird ein Flipchip-kontaktierbares, als Filter verwendbares elektrisches Vielschichtbauelement angeboten, welches an einer einzigen Seitenfläche sämtliche elektrische Außenkontakte aufweist, die mit entsprechenden Gegenkontakten einer Leiterplatte kontaktiert werden können.

Figur 6B stellt einen Querschnitt des mit der Figur 6A gezeigten Vielschichtbauelements dar, wobei dieser Querschnitt zwischen den auf der kontaktseitigen Außenfläche 5a angeordneten Außenkontakten 4a, 4b, 4c und dem Schichtstapel 1 angeordnet ist. Diese Querschnittsansicht zeigt die kontaktseitigen Kanten der Masseelektroden 7, welche bis an die kontaktseitige Außenfläche 5a des Schichtstapels 1 reichen, um eine Kontaktierung mit einem auf dieser Außenfläche angeordneten Massenkontakt 4c zu ermöglichen. Darüber hinaus werden mehrere Vielschichtstrukturen A und B gezeigt, welche unterschiedliche elektrische Funktionen, wie beispielsweise als ein Vielschichtkondensator oder ein Vielschichtvaristor, aufweisen könnten. Die Masseelektroden 7 zusammen mit den Massekontakten 4c sind in der Lage, hochfrequente Störsignale bzw. aus einer Überspannung stammende hochfrequente Frequenzen abzuleiten, um somit dem Vielschichtbauelement ein günstiges Filterverhalten zu verleihen und vor solchen Überspannungen zu schützen.

Figur 6C zeigt einen Querschnitt des mit der Figur 6A in einer seitlichen Ansicht gezeigten Vielschichtbauelements, wobei der Querschnitt durch die kontaktseitig an der Außenfläche 5a des Schichtstapels 1 angeordneten Außenkontakte 4a und 4b für die jeweiligen Vielschichtstrukturen A und B verläuft. Dabei werden die flächige, rechteckigförmige Ausdehnung des Massekontakts 7 sowie die flächigen Ausdehnungen der die Elektrodenschichten der Vielschichtstrukturen A und B kontaktierenden Außenkontakte 4a, 4b gezeigt. Unterhalb des Massekontakts sind die bodenseitigen Kanten der längeren Schenkel 3b der Elektrodenschichten 3 mittels gestrichelter Linien gezeigt.

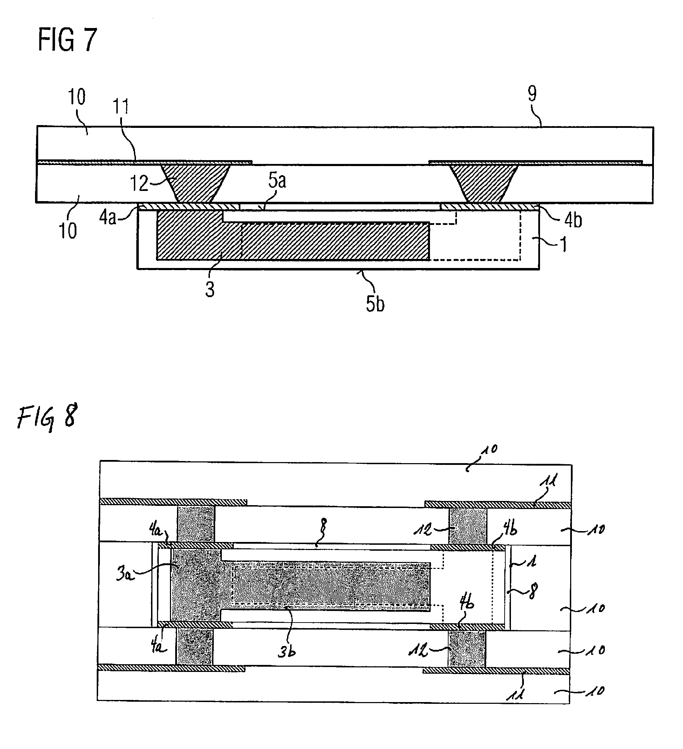

Figur 7 zeigt ein elektrisches Vielschichtbauelement mit einem in diesem Dokument beschriebenen Aufbau, welches mittels Flipchip-Kontakten 4a und 4b auf einer Leiterplatte 9 montiert ist, wobei die Flipchip-Kontakte 4a und 4b insbesondere mit einem elektrisch leitenden Material, beispielsweise Kupfer, gefüllten Durchkontaktierungen bzw. Vias 12 kontaktiert sind. Die Vias 12 können mit in der Leiterplatte integrierten Leiterbahnen 11 kontaktiert sein. Die Leiterplatte weist vorzugsweise mehrere Schichten 10 auf, auf die jeweils Leiterbahnen und weitere elektronische Strukturen aufgebracht sein können. Die Schichten der Leiterplatte sind vorzugsweise elektrisch isolierend und enthalten vorzugsweise ein Polymer.

Mit der Figur 8 ist eine Anordnung umfassend ein Leiterplattenlaminat ("Printed Circuit Board"-Laminat), in dem ein Vielschichtbauelement mit vertikal ausgerichteten Innenelektroden gemäß zuvor beschriebener Ausführungsbeispiele enthalten ist, gezeigt. Die Innenelektroden verlaufen hochkant zu den Leiterplattenschichten 10 des Laminats. Beim Leiterplattenlaminat handelt es sich um übereinander gestapelte Leiterplattenschichten 10, auf die elektrisch leitende oder elektrisch isolierende Strukturen aufgebracht werden können.

Der Stapel 1 aus dielektrischen Schichten und Elektrodenschichten ist hochkant auf einer Leiterplattenschicht 10 aufgebracht. Die Oberseite und die Unterseite des Stapels 1 ist jeweils mit Außenkontakten 4a und 4b versehen. Unterseitige Außenkontakte 4a und 4b kontaktieren dabei Durchkontaktierungen 12, die in der Leiterplattenschicht 10 eingearbeitet sind, auf der der Stapel 1 angeordnet ist. Diese Durchkontaktierungen 12 sind jeweils mit einer Leiterbahn 11 kontaktiert, welche auf einer weiteren Leiterplattenschicht 10 des Laminats aufgebracht sind. Oberseitig ist der Stapel 1 des Vielschichtbauelements in analoger Weise elektrisch kontaktiert.

Die Elektrodenschichten 3 des Stapels 1 weisen gegenüber zuvor beschriebenen Ausführungsbeispielen eine T-Form auf, wobei der kürzere Schenkel 3a der T-förmigen Innenelektrode vertikal verlaufend mit ober- und unterseitig auf dem Stapel aufgebrachte, gleichpolige Außenkontakte 4a verbunden ist. Der längere Schenkel 3b der T-förmigen Innenelektrode verläuft dabei senkrecht zum kürzeren Schenkel der Innenelektrode und ist von Gegenkontakten elektrisch isoliert.

Zur Herstellung der Anordnung wird das Vielschichtbauelement auf eine Leiterplattenschicht 10 montiert. Dabei wird der Stapel 1 mit seinen unterseitigen Außenkontakten gezeilt auf die Durchkontaktierungen 12 der Leiterplattenschicht gelegt um damit eine unterseitige elektrische Kontaktierung herzustellen. Auf das so montierte Vielschichtbauelement wird eine weitere Leiterplattenschicht gelegt, welche unterseitig, d.h. auf der dem Vielschichtbauelement zugewandten Seite, ein verformbares Material wie zum Beispiel Harz oder weiches Polymer aufweist. Diese Leiterplattenschicht wird vorzugsweise mittels eines Vakuumlaminierungsverfahrens aufgebracht. Dabei wird die Erzeugung von Freiräumen zwischen dem Vielschichtbauelement und umliegendem Material der aufgebrachten Leiterplattenschicht vermieden. Das kann beispielsweise mittels einer geeigneten Temperatur- und Druck einstellung während des Aufbringens der Leiterplattenschicht erreicht werden. Für die Durchkontaktierungen 12 der auf dem Vielschichtbauelement liegenden Leiterplattenschicht werden beispielsweise mittels Fräsen, vorzugsweise mittels eines Lasers, Aussparungen erzeugt, welche mit einem elektrisch leitenden Material, wie zum Beispiel Kupfer, aufgefüllt werden. Vorzugsweise wird zur Erzeugung der Aussparung ein UV / CO₂ Dual-Laserstrahl verwendet. Auf der Oberseite der nun mit Durchkontaktierungen versehenen Leiterplattenschicht können anschließend vorzugsweise kupferhaltige Leiterbahnen 11 aufgedruckt werden, welche mit den Durchkontaktierungen verbunden sind. Eine weitere Leiterplattenschicht 10 kann die zuvor auf das Vielschichtbauelement gelegte Leiterplattenschicht abdecken.

Anstelle dass eine Leiterplattenschicht auf das Vielschichtbauelement gelegt wird kann alternativ eine Aussparung in einer Leiterplattenschicht erzeugt werden, in die das Vielschichtbauelement passungsdicht eingesetzt wird. Vorzugsweise verläuft die Oberseite des Vielschichtbauelement dabei plan zur Oberseite der Leiterplattenschicht, in der das Vielschichtbauelement eingebettet ist. Die Tiefe der Aussparung bzw. des Lochs in der Leiterplattenschicht entspricht somit vorzugsweise der Höhe des hochkant gestellten Vielschichtbauelements. Die Aussparung wird vorzugsweise mittels Fräsen, insbesondere Läserfräsen, erzeugt.

Gemäß einer Ausführungsform der Anordnung wird ein oberflächenmontierbares Bauelement (SMD-Chip) mit unterseitigen Außenkontakten, beispielsweise in der Form von Lotbumps bzw. Lotkugeln, auf das Leiterplattenlaminat bzw. dessen Durchkontaktierungen oder dessen mit Durchkontaktierungen verbundenen Leiterbahnen montiert. Somit wird eine Anordnung von elektrischen Bauelementen und Leiterplattenstrukturen mit hoher Integrationsdichte in Flachbauweise erreicht.

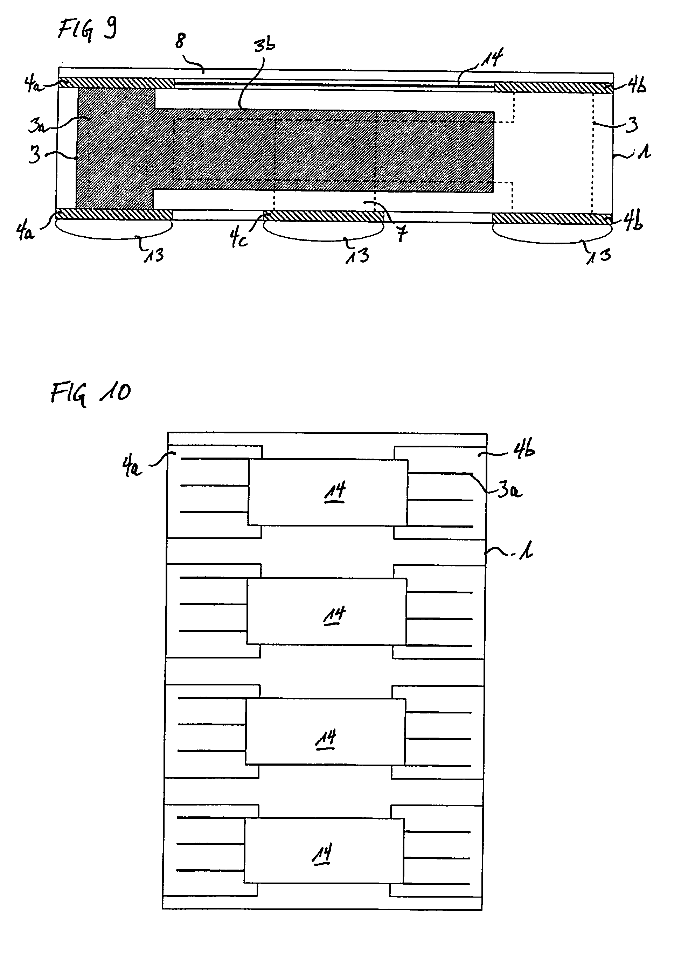

Figur 9 zeigt ein oberflächenmontierbares elektrisches Vielschichtbauelement mit bezogen auf eine Montagefläche bzw. Leiterplattenschicht 10 senkrecht verlaufenden Elektrodenschichten 3. Ein zusätzlicher Außenkontakt 4c bildet einen elektrischen Außenkontakt für eine im Stapel angeordnete Masseelektrode 7. Zwischen den oberseitigen Außenkontakten 4a und 4b und mit diesen verbunden verläuft an der Oberfläche des Stapels, d.h. beispielsweise entlang der Kanten der dem zugehörigen dielektrischen Schichten 2, ein Widerstand 14. Dieser kann als Widerstandsbahn- oder schicht aufgedruckt sein und vorzugsweise Ruteniumoxid (RuOₓ) enthalten, wobei x für eine Zahl ≥ 1 steht und die Höhe der Oxidationszahl angibt. Zwischen dem Widerstand und der Oberfläche des Stapels 1 kann wahlweise eine Passivierungsschicht vorhanden sein. In dieser Figur wird eine den Widerstand abdeckende Passivierungsschicht 8 gezeigt. Mit dem Widerstand wird ein Π-Filter erzeugt, wobei Kapazitäten zwischen gegenpoligen Elektrodenschichten 3 und dazwischen liegenden dielektrischen Schichten 3 gebildet werden und diese mittels eines Widerstands und einer Masse miteinander verschaltet sind. Zwar ist hier beispielhaft ein Π-Filter genannt; es können jedoch auch andere Filter mit dieser oberflächenmontierbaren Bauart und senkrecht zu einer Montagefläche verlaufenden Innenelektroden bereitgestellt werden, wie zum Beispiel ein Tiefpass- bzw. Rauschfilter. Das Vielschichtbauelement kann als Filterarray bzw. als Filtermodul mit mehreren Sätzen von Innenelektroden und diesen zugeordneten Außenkontakten ausgeführt sein. Jeweilige Filter bzw. Innenelektrodensätze teilen dabei jedoch den gleichen bzw. einem gemeinsamen Stapel von dielektrischen Schichten.

Figur 10 zeigt eine Draufsicht auf die Oberseite eines Filterarrays bzw. Vielschichtbauelementmoduls gemäß Figur 9. Es wird gezeigt, wie Widerstände 14 jeweils die Außenkontakte 4a und 4b eines Filters kontaktieren. Die Kanten der kürzeren Schenkel 3a, welche mit den Außenkontakten 4a und 4b verbunden sind, werden mit horizontalen Linien gezeigt.

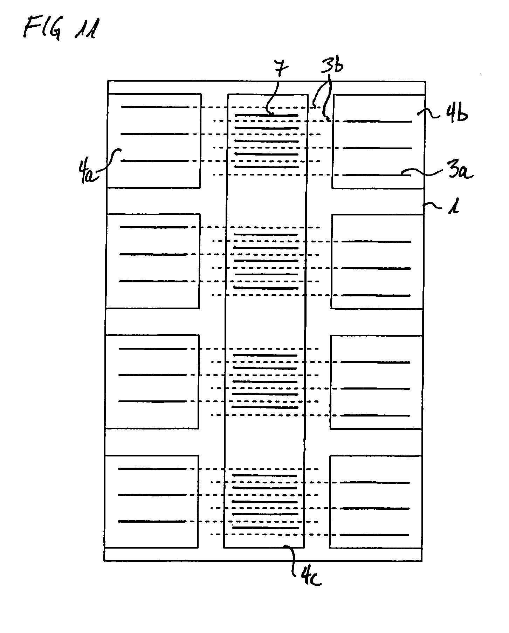

Figur 11 zeigt ist eine Draufschicht auf die Unterseite eines Filterarrays bzw. Vielschichtbauelementmoduls gemäß Figur 9. Es wird gezeigt, wie ein Massekontakt 4c die Masseelektroden 7 eines jeden Filters kontaktieren. Der Massekontakt 4c ist dabei vorzugsweise als länglicher Streifen an der Unterseite des Stapels 1 ausgebildet. Die gestrichelten Linien zeigen die Kanten der im Vielschichtbauelement eingebetteten längeren Schenkel 3b der Innenelektroden 3.

### Bezugszeichenliste

- 1: Stapel von dielektrischen Schichten und Elektrodenschichten
- 2: dielektrische Schichten
- 3: Elektrodenschichten
- 3a: kürzere Schenkel einer L-förmigen Elektrodenschicht
- 3b: längere Schenkel einer L-förmigen Elektrodenschicht
- 4a: erster Außenkontakt
- 4b: zweiter Außenkontakt
- 4c: Massekontakt
- 5a: kontaktseitige Außenfläche des Vielschichtbauelements
- 5b: andere Außenfläche des Vielschichtbauelements
- 6: Sperrschicht
- 7: Masseelektrode
- 8: Passivierungsschicht
- 9: Leiterplatte
- 10: Substratschichten einer Leiterplatte
- 11: elektrische Leiterbahn einer Leiterplatte
- 12: Durchkontaktierung einer Leiterplatte
- 13: Lotbump bzw. Lotkugel
- 14: Widerstand

## Patentansprüche

1. Elektrisches Vielschichtbauelement, aufweisend:
- einen Stapel (1) von nebeneinander angeordneten dielektrischen Schichten (2) und Elektrodenschichten (3), sowie
- gegenpolige Außenkontakte (4a, 4b), welche an ein und derselben Außenfläche (5a) des Stapels (1) angeordnet sind und Flipchip-kontaktierbar sind, wobei
- die Elektrodenschichten mit einem Ende jeweils mit einem gleich gepolten Außenanschluss verbunden sind,
- **dadurch gekennzeichnet, dass** sich die unterschiedlich gepolten Elektrodenschichten (3) in orthogonaler Projektion nicht überlappen, wobei zwei unterschiedlich gepolte Elektrodenschichten auf einer gemeinsamen dielektrischen Schicht (2) angeordnet sind und einen Abstand zueinander aufweisen.

2. Elektrisches Vielschichtbauelement nach Anspruch 1, bei dem die Elektrodenschichten (3) L-förmig sind, wobei ein erster Schenkel (3a) einer Elektrodenschicht mit einem Außenkontakt (4a, 4b) verbunden ist und der zweite Schenkel (3b) parallel zu einer Montagefläche (6), auf die das Vielschichtbauelement montierbar ist, verläuft.

3. Elektrisches Vielschichtbauelement nach einem der vorhergehenden Ansprüche, bei dem die Elektrodenschichten (3) an jeweils mehreren Seiten bis an eine Außenfläche (5a, 5b) des Stapels (1) herangeführt sind.

4. Elektrisches Vielschichtbauelement nach einem der vorhergehenden Ansprüche, bei dem Außenkontakte (4a, 4b) auf unterschiedlichen Randbereichen derselben Außenfläche (5a) des Stapels (1) angeordnet sind.

5. Elektrisches Vielschichtbauelement nach einem der vorhergehenden Ansprüche, bei dem zumindest eine Außenfläche (5a, 5b) des Stapels (1) zumindest teilweise passiviert ist.

6. Elektrisches Vielschichtbauelement nach einem der vorhergehenden Ansprüche, aufweisend mehrere nebeneinander angeordnete Stapel von Elektrodenschichten, wobei zu unterschiedlichen Stapel gehörende Elektrodenschichten auf gemeinsamen dielektrischen Schichten (2) angeordnet sind.

7. Elektrisches Vielschichtbauelement nach einem der vorhergehenden Ansprüche, bei dem dielektrische Schichten (2) eine Varistorkeramik und/oder eine Kondensatorkeramik enthalten.

8. Elektrisches Vielschichtbauelement nach einem der vorhergehenden Ansprüche, bei dem dielektrische Schichten (2) ein nichtlinear resistives Material enthalten.

9. Elektrisches Vielschichtbauelement nach einem der Ansprüche 6 bis 8, bei dem Elektrodenschichten (3) wechselwirkend mit dielektrischen Schichten (2) zumindest einer der Folgenden bilden: Vielschichtvaristor, Vielschichtkondensator, Vielschicht-NTC-Widerstand oder Vielschicht-PTC-Widerstand.

10. Montageanordnung für ein elektrisches Vielschichtbauelement, aufweisend ein elektrisches Vielschichtbauelement nach einem der vorhergehenden Ansprüche, das auf einer Leiterplatte (9) montiert ist, wobei ein elektrischer Kontakt zwischen dem Vielschichtbauelement und der Leiterplatte zwischen Kontakten der Leiterplatte und den Außenkontakten (4a, 4b, 4c) hergestellt ist.

11. Montageanordnung nach Anspruch 10, bei dem die Leiterplatte (9) mehrere Substratschichten (10) aufweist, zwischen denen elektrische Leiterbahnen (11) angeordnet sind.

12. Montageanordnung nach einem der Ansprüche 10 oder 11, bei dem das Vielschichtbauelement in einer Schichtenfolge von Leiterplattenschichten eingebettet ist.

## Claims

1. Electric multilayer component, comprising:
- a stack (1) of dielectric layers (2) and electrode layers (3) arranged alongside one another, and also
- external contacts (4a, 4b) of opposite polarities, which are arranged at one and the same outer surface (5a) of the stack (1) and are flip-chip contact-connectable, wherein
- the electrode layers are connected by one end in each case to an external connection having the same polarity,
- **characterized in that** the electrode layers (3) having different polarities do not overlap in orthogonal projection, wherein two electrode layers having different polarities are arranged on a common dielectric layer (2) and at a distance from one another.

2. Electric multilayer component according to Claim 1, wherein the electrode layers (3) are L-shaped, wherein a first limb (3a) of an electrode layer is connected to an external contact (4a, 4b) and the second limb (3b) runs parallel to a mounting surface (6) onto which the multilayer component is mountable.

3. Electric multilayer component according to either of the preceding claims, wherein the electrode layers (3) are led as far as an outer surface (5a, 5b) of the stack (1) at a plurality of sides in each case.

4. Electric multilayer component according to any of the preceding claims, wherein external contacts (4a, 4b) are arranged on different edge regions of the same outer surface (5a) of the stack (1).

5. Electric multilayer component according to any of the preceding claims, wherein at least one outer surface (5a, 5b) of the stack (1) is at least partly passivated.

6. Electric multilayer component according to any of the preceding claims, comprising a plurality of stacks of electrode layers arranged alongside one another, wherein electrode layers belonging to different stacks are arranged on common dielectric layers (2).

7. Electric multilayer component according to any of the preceding claims, wherein dielectric layers (2) contain a varistor ceramic and/or a capacitor ceramic.

8. Electric multilayer component according to any of the preceding claims, wherein dielectric layers (2) contain a non linearly resistive material.

9. Electric multilayer component according to any of Claims 6 to 8, wherein electrode layers (3) interacting with dielectric layers (2) form at least one of the following: multilayer varistor, multilayer capacitor, multilayer NTC resistor or multilayer PTC resistor.

10. Mounting arrangement for an electric multilayer component, comprising an electric multilayer component according to any of the preceding claims, which is mounted on a printed circuit board (9), wherein an electrical contact between the multilayer component and the printed circuit board is established between contacts of a printed circuit board and the external contacts (4a, 4b, 4c).

11. Mounting arrangement according to Claim 10, wherein the printed circuit board (9) has a plurality of substrate layers (10) between which electrical conductor tracks (11) are arranged.

12. Mounting arrangement according to either of Claims 10 and 11, wherein the multilayer component is embedded in a layer sequence of printed circuit board layers.

## Revendications

1. Composant électrique multicouche, comportant :
- un empilement (1) de couches diélectriques (2) et de couches d'électrode (3) disposées côte à côte ; ainsi que
- des contacts extérieurs (4a, 4b) de pôles contraires disposés au niveau d'une seule et même surface extérieure (5a) de l'empilement (1) et pouvant être mis au contact d'une puce de type flipchip ;
- les couches d'électrode étant respectivement reliées, avec une extrémité, à une borne extérieure de même pôle ;
- **caractérisé en ce que** les couches d'électrode (3) de pôles différents ne se chevauchent pas en projection perpendiculaire, deux couches d'électrode de pôles différents étant disposées sur une couche diélectrique (2) commune et présentant une certaine distance l'une par rapport à l'autre.

2. Composant électrique multicouche selon la revendication 1, dans lequel les couches d'électrode (3) sont en forme de L, un premier côté (3a) d'une couche d'électrode étant relié à un contact extérieur (4a, 4b) et le deuxième côté (3b) s'étendant parallèlement à une surface de montage (6) sur laquelle le composant multicouche peut être monté.

3. Composant électrique multicouche selon l'une quelconque des revendications précédentes, dans lequel les couches d'électrode (3) sont respectivement approchées de plusieurs côtés jusqu'à une surface extérieure (5a, 5b) de l'empilement (1).

4. Composant électrique multicouche selon l'une quelconque des revendications précédentes, dans lequel les contacts extérieurs (4a, 4b) sont disposés sur différentes zones de bordure de la même surface extérieure (5a) de l'empilement (1).

5. Composant électrique multicouche selon l'une quelconque des revendications précédentes, dans lequel au moins une surface extérieure (5a, 5b) de l'empilement (1) est au moins en partie rendue passive.

6. Composant électrique multicouche selon l'une quelconque des revendications précédentes, comportant plusieurs empilements de couches d'électrode disposés côte à côte, les couches d'électrode appartenant à différents empilements étant disposées sur des couches diélectriques (2) communes.

7. Composant électrique multicouche selon l'une quelconque des revendications précédentes, dans lequel les couches diélectriques (2) contiennent une céramique de varistance et/ou une céramique de condensateur.

8. Composant électrique multicouche selon l'une quelconque des revendications précédentes, dans lequel les couches diélectriques (2) contiennent une matière résistive non linéaire.

9. Composant électrique multicouche selon l'une quelconque des revendications 6 à 8, dans lequel les couches d'électrode (3) forment avec un effet alterné avec les couches diélectriques (2) au moins un des éléments suivants : une varistance multicouche, un condensateur multicouche, une résistance NTC multicouche ou une résistance PTC multicouche.

10. Agencement de montage pour un composant électrique multicouche, comportant un composant électrique multicouche selon l'une quelconque des revendications précédentes monté sur une plaque conductrice (9), un contact électrique étant établi entre le composant multicouche et la plaque conductrice entre les contacts de la plaque conductrice et les contacts extérieurs (4a, 4b, 4c).

11. Agencement de montage selon la revendication 10, dans lequel la plaque conductrice (9) comporte plusieurs couches de substrat (10) entre lesquelles sont disposées des pistes électriquement conductrices (11).

12. Agencement de montage selon l'une quelconque des revendications 10 ou 11, dans lequel le composant multicouche est encastré dans une succession de couches composée de couches de plaques conductrices.
